# EUROPÄISCHE PATENTSCHRIFT

(11) **EP 2 886 305 B1**
(45) Veröffentlichungstag und Bekanntmachung des Hinweises auf die Patenterteilung: **30.05.2018**
(21) Anmeldenummer: 13198709.1
(22) Anmeldetag: 20.12.2013
(51) Int. Cl.: B29C 65/60, B29C 65/08, B29C 65/10, B29C 65/74, B29C 65/14, B29L 31/30, B29L 31/00

(54) **Verbindungsverfahren**
Joining procedure
Procédé de jonction

(43) Veröffentlichungstag der Anmeldung: 24.06.2015
(73) Patentinhaber: LANXESS Deutschland GmbH, 50569 Köln (DE)
(72) Erfinder: Koch Boris, 42929 Wermelskirchen (DE); Haspel Julian, 53325 Bonn (DE); Schröer Lukas, 41542 Dormagen (DE)

(56) Entgegenhaltungen:
- EP-A1- 0 392 568
- EP-A1- 0 823 320
- DE-A1-102004 038 084

## Beschreibung

Die vorliegende Erfindung betrifft die formschlüssige und stoffschlüssige Verbindung endlosfaserverstärkter Halbzeuge mit Thermoplastteilen sowie einen Verbindungsprozess.

Literaturbekannt sind verschiedene Verbindungstechniken für Kunststoffteile, insbesondere Schweißverbindungen, Klebverbindungen, Schraubverbindungen, Nietverbindungen, Preßverbindungen, Schnappverbindungen und Filmgelenke. J. Holtkamp, Kunststoffe 2/2008, Seiten 25-29, Carl Hanser Verlag beschreibt Nietverbindungen, die aus zwei Kunststoffteilen bestehen. Das erste Bauteil besitzt dabei einen oder mehrere Nietzapfen bzw. Nietschäfte. Das zweite Bauteil besitzt genau an der Stelle, an der die Nietverbindung erfolgen soll, eine Bohrung, die den Nietzapfen aufnehmen kann. Beim Nietvorgang wird ein Nietzapfen vom ersten Bauteil durch die Bohrung des zweiten Bauteils hindurch gesteckt und der Nietzapfen wird anschließend durch Erhitzen aufgeschmolzen. Hierzu eignen sich unterschiedliche Mechanismen wie Wärmeleitung, Heißluft, Infrarotstrahlung und auch Ultraschall. Ein geeignetes Umformwerkzeug formt aus dem erwärmten plastifizierten Nietzapfen schließlich einen Nietkopf.

Das Nietdorn-Schweißprinzip ist ein weit verbreitetes Verfahren zum Verbinden von Bauteilen. Dabei ist es üblich, in den Verbindungspartnern Öffnungen vorzusehen, um den Formschluss herzustellen. Auch bei Variationen von Kunststoffnietverbindungen wird immer in einem vorangehenden Prozessschritt wenigstens ein Loch in wenigstens eines der zu verbindenden Bauteile gebohrt, gestanzt oder gefräst. So wird in EP 1 661 689 A2 ein Verfahren beschrieben, bei dem ein Nietdorn durch eine Öffnung in ein zweites Bauteil gesteckt wird und anschließend mit einem entsprechenden Schweißkopf aufgeschmolzen und zu einem Nietkopf ausgeformt wird.

EP 0 340 094 A1 beschreibt ein Verfahren worin ein Montageteil einen angesetzten Stift besitzt und das zu verbindende zweite Bauteil eine Öffnung aufweist, durch die der Stift gedrückt wird. Nachteilig bei diesem Verfahren ist, dass im Falle des Einsatzes endlosfaserverstärkter Kunststoffe die kontinuierlichen Verstärkungen geschädigt und das Material gerade dort, wo es auf hohe Festigkeiten ankommt, geschwächt wird.

In EP 2 570 685 A1 wird diese Problematik dadurch gelöst, indem ein zunächst kegelförmiges Nietelement ohne vorheriges Bohren in das endlosfaserverstärkte Bauteil eingebracht und dann mittels eines Dorns aufgeweitet wird. Das Material des endlosfaserverstärkten Bauteils muss zu diesem Zweck ausreichend weich sein. Das eingebrachte Nietelement ist bei diesem Verfahren allerdings nicht Teil eines Fügepartners.

Durch die bisher beschriebenen Verfahren werden Nietverbindungen mit Formschluss erzielt. Um jedoch nicht nur einen Formschluss sondern zudem auch einen Stoffschluss zu erzielen, lehrt DE 2007 1 055 856 A1 ein Verfahren, bei dem ein Fügepartner einen Nietdorn aufweist und der Fügepartner auf der dem Nietdorn des ersten Bauteils abgewandten Seite an der Öffnung eine Schweißrippe aufweist. Nietkopf und Schweißrippe werden gemeinsam aufgeschmolzen und ausgeformt. EP0392568 und EP0823320 offenbaren Verfahren zur Verbindung wenigstens eines faserverstärkten Halbzeugs mit wenigstens einem Thermoplastteil. Ausgehend von diesem Stand der Technik bestand die Aufgabe der vorliegenden Erfindung darin, eine kostengünstige und gewichtsoptimierte Lösung unter Verwendung von endlosfaserverstärkten Halbzeugen zu generieren, ohne dass zuvor eines der zu verbindenden Bauteile mit einer Öffnung zur Aufnahme eines Nietdorns zu versehen ist. Mit einer solchen Lösung ließen sich zudem Nachteile der nach dem Stand der Technik erhältlichen Bauteile überwinden, insbesondere eine derzeitig in der Kraftfahrzeugindustrie zu große Temperaturausdehnung von Bauteilen, deren teilweise wenig anmutende Oberflächenqualität und insbesondere die fehlende Steifigkeit solcher Bauteile.

Endlosfaserverstärkte Halbzeuge, auch als Organoblech bezeichnet, haben in jüngster Zeit Einzug im Kraftfahrzeugbau gefunden. Diese werden unter dem Namen Tepex® von Bond-Laminates GmbH, Brilon, Deutschland oder als Ultracom™ von der BASF SE, Ludwigshafen, Deutschland angeboten. Es handelt sich dabei um Halbzeuge, also Laminate aus Fasergeweben bzw. Fasergelegen und unidirektionalen Tapes, die mit einem thermoplastischen Kunststoff imprägniert sind.

Lösung der Aufgabe und Gegenstand der vorliegenden Erfindung ist ein Verfahren zur Verbindung wenigstens eines endlosfaserverstärkten Halbzeugs mit wenigstens einem Thermoplastteil, dadurch gekennzeichnet, dass man
a) wenigstens ein endlosfaserverstärktes Halbzeug in einem Presswerkzeug lokal dort erwärmt, wo der Verbund von endlosfaserverstärktem Halbzeug mit wenigstens einem thermoplastischen Bauteil erfolgen soll,
b) wenigstens einen zunächst pyramidalen oder kegelförmigen Nietdorn oder Nietzapfen als Bestandteil des wenigstens einen Thermoplastteils durch das wenigstens eine lokal erhitzte zuvor weder gelochte noch durchbohrte endlosfaserverstärkte Halbzeug hindurch dringen lässt unter Beibehaltung der ursprünglichen Geometrie des/der Nietdorns(e) bzw. Nietzapfen(s) und
c) den wenigstens einen durch das wenigstens eine endlosfaserverstärkte Halbzeug nach Schritt b) hinausragenden Nietdorn bzw. Nietzapfen durch wenigstens einen Nietstempel zu einem Nietkopf bzw. Nietköpfen umformt und erstarren lässt, wobei es sich bei dem endlosfaserverstärkten Halbzeug um wenigstens eine Lage eines Endlosfasertextils in einem Thermoplasten als Matrixkunststoff handelt.

Überraschenderweise erhält man durch das erfindungsgemäße Verfahren eine kostengünstige Alternative zu Schweiß- oder Klebeverfahren die sonst für die Verbindung von endlosfaserverstärkten Halbzeugen mit thermoplastischen Bauteilen erforderlich wären, indem einerseits auf Schweiß- oder Klebeverfahren verzichtet werden kann, wodurch es entweder zu Materialeinsparungen oder Arbeitsschritteinsparungen kommt, oder andererseits Bohrungen oder Lochungen im endlosfaserverstärkten Halbzeug vermieden werden, die ebenfalls einen zusätzlichen Arbeitsschritt erfordern und andererseits das endlosfaserverstärkte Halbzeug destabilisieren könnten.

Die vorliegende Erfindung betrifft aber auch den Verbund von endlosfaserverstärkten Halbzeugen mit wenigstens einem Thermoplastteil, erhältlich durch eines der in der vorliegenden Anmeldung beschriebenen Verfahren, bevorzugt durch
a) Erwärmen wenigstens eines endlosfaserverstärkten Halbzeugs in einem Presswerkzeug lokal dort, wo der Verbund von endlosfaserverstärktem Halbzeug mit wenigstens einem Thermoplastteil erfolgen soll,
b) Durchdringen des wenigstens einen zunächst pyramidalen oder kegelförmigen Nietdorns oder Nietzapfens als Bestandteil des wenigstens einen Thermoplastteils durch das wenigstens eine, lokal erhitzte, zuvor weder gelochte noch durchbohrte endlosfaserverstärkte Halbzeug unter Beibehaltung der ursprünglichen Geometrie des/der Nietdorns(e) bzw. Nietzapfen und
c) Umformen und anschließendes Erstarren des wenigstens einen durch das wenigstens eine endlosfaserverstärkte Halbzeug hinausragenden Nietdorns bzw. Nietzapfens durch wenigstens einen Nietstempel zu einem Nietkopf bzw. Nietköpfen, wobei es sich bei dem endlosfaserverstärkten Halbzeug um wenigstens eine Lage eines Endlosfasertextils in einem Thermoplasten als Matrixkunststoff handelt.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind. Das endlosfaserverstärkte Halbzeug wird im Rahmen der vorliegenden Erfindung auch als Organoblech bezeichnet. Im Rahmen der vorliegenden Anmeldung sind die Begriffe Nietdorn und Nietzapfen gleich bedeutend.

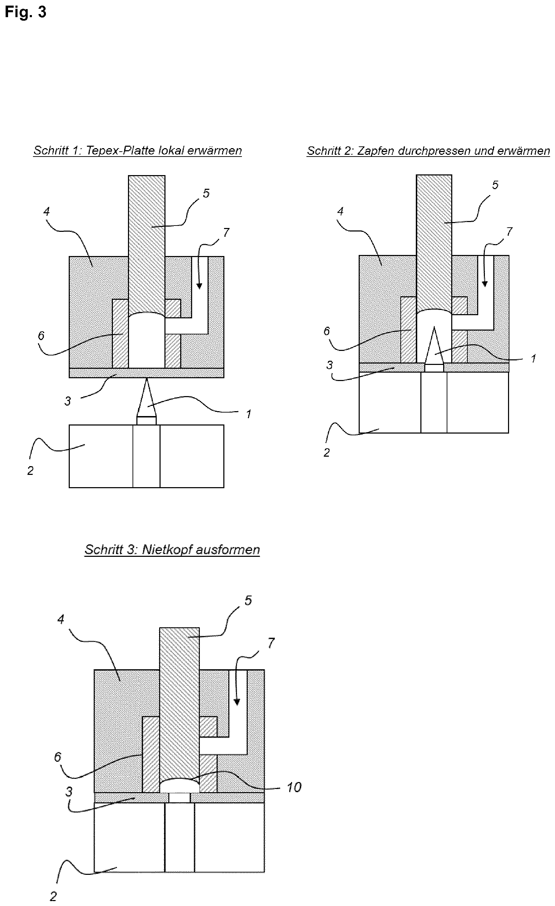

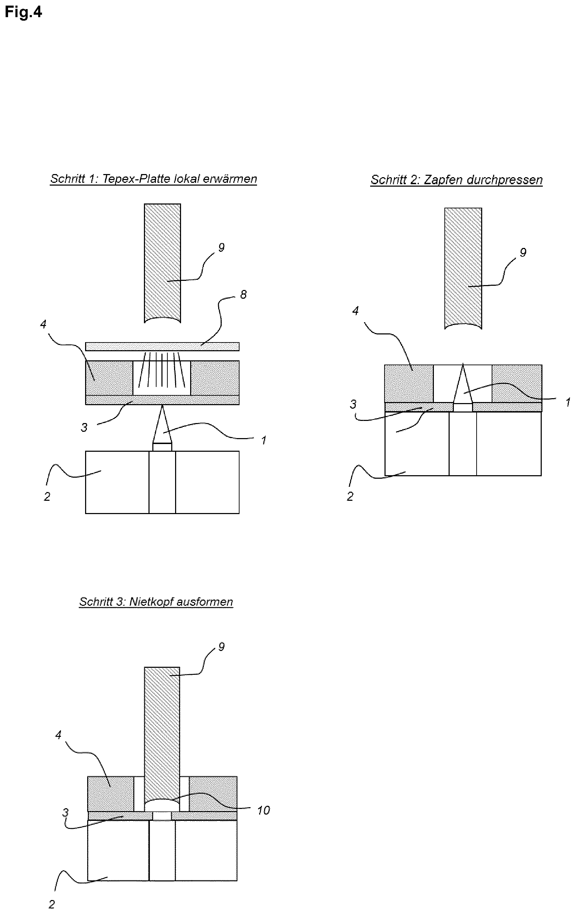

In einer bevorzugten Ausführungsform wird vor Verfahrensschritt c) der wenigstens eine durch das wenigstens eine endlosfaserverstärkte Halbzeug hinausragende Nietdorn bzw. Nietzapfen vor der Umformung erwärmt. Bevorzugt erfolgt die Erwärmung des wenigstens einen Nietkopfes durch Heißluft - wie in Fig. 3 dargestellt - oder durch Ultraschallschwingungen - wie in Fig. 4 dargestellt.

In einer bevorzugten Ausführungsform handelt es sich bei dem Thermoplastteil um ein spritzgegossenes oder gepresstes Thermoplastteil, bevorzugt um ein spritzgegossenes Thermoplastteil.

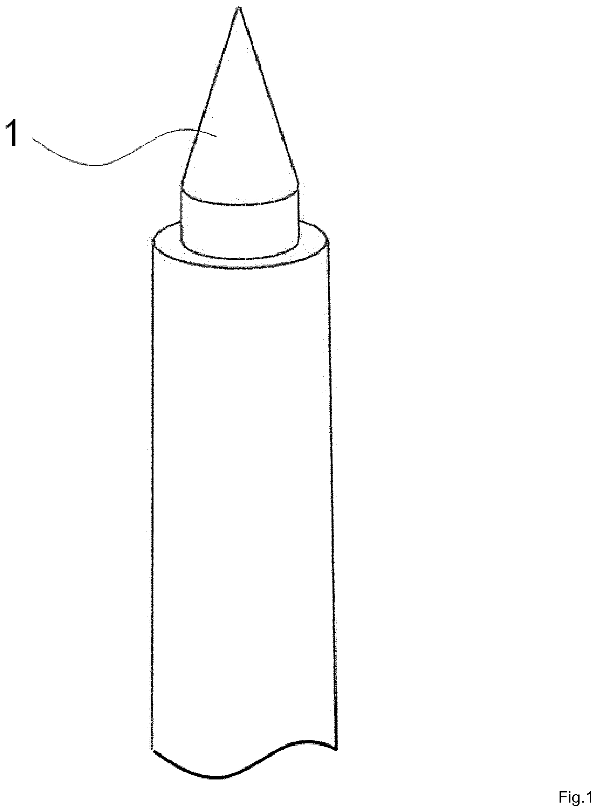

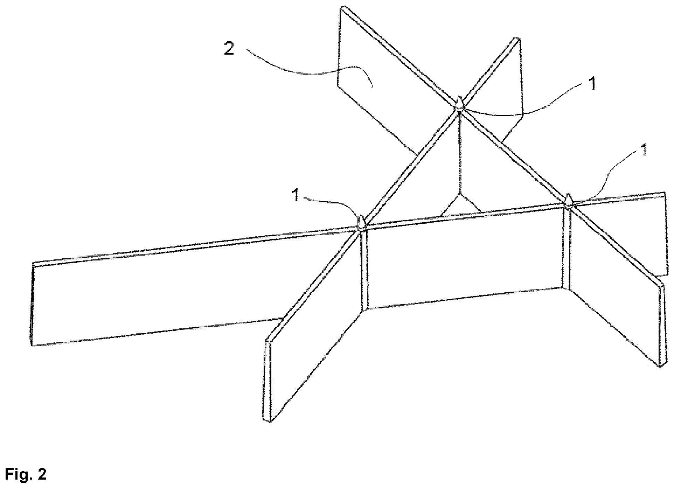

Die vorliegende Erfindung wird nachstehend anhand der Fig. 1 bis Fig. 5 erläutert, die jeweils eine insbesondere bevorzugte Ausführungsform der Erfindung darstellen. In den Fig. 1 bis Fig. 5 bedeuten 1 = Nietdorn oder Nietzapfen; 2 = spritzgegossenes (oder gepresstes) Thermoplastteil, z.B. eine Rippenstruktur; 3 = endlosfaserverstärktes Halbzeug; 4 = Presswerkzeug; 5 = Nietstempel; 6 = Führungs- und Isolationshülse; 7 = Heißluft; 8 = Infrarot Strahler; 9 = Ultraschall Nietstempel; 10 = Nietkopf.
Fig.1 zeigt einen erfindungsgemäß einzusetzenden kegelförmigen Nietdorn bzw. Nietzapfen.
Fig.2 zeigt ein erfindungsgemäß einzusetzendes Thermoplastbauteil (2) mit drei Nietdornen (1) / bzw. Nietzapfen, angeordnet auf den Rippenkreuzen des Thermoplastbauteils.
Fig.3 zeigt die Verfahrensschritte des erfindungsgemäßen Verfahrens:
   a) das lokale Erwärmen eines durch Führungs- und Isolationshülsen (6) in einem Presswerkzeug (4) fixierten endlosfaserverstärkten Halbzeugs (3), bevorzugt einer Tepex® Platte, in einem Presswerkzeug (4) durch Heißluft, die durch den Kanal (7) eingeblasen wird, wobei (3) auf seiner Gegenseite durch wenigstens einen pyramidalen oder kegelförmigen Nietdorn bzw. Nietzapfen (1) als Bestandteil eines als Fügepartner dienenden Thermoplastteils (2) fixiert wird,
   b) das Durchdringen des in Schritt a) erwärmten endlosfaserverstärkten Halbzeugs (3) von wenigstens einem pyramidalen oder kegelförmigen Nietdorn bzw. Nietzapfen (1) als Bestandteil des als Fügepartner dienenden wenigstens einen Thermoplastteils (2), ohne dass zuvor das endlosfaserverstärkte Halbzeug (3) gebohrt oder gelocht wurde mit anschließender Erwärmung des wenigstens einen pyramidalen oder kegelförmigen Nietdorns bzw. Nietzapfens (1) mittels Heißluft (7) und
   c) das Umformen des wenigstens einen nach Schritt b) erhitzten und mit der Spitze aus dem durchbrochenen endlosfaserverstärkten Halbzeug (3) hinausragenden pyramidalen oder kegelförmigen Nietdorns bzw. Nietzapfens (1) durch einen Nietstempel (5) zu wenigstens einem Nietkopf (10) sowie Erstarren desselben oder derselben und Erhalt eines festen Stoffschlusses und Formschlusses von Thermoplastteil (2) und endlosfaserverstärktem Halbzeug (3).
Fig. 4 zeigt eine erfindungsgemäße Variante zu dem in Fig.3 dargestellten und beschriebenen Verfahren, indem
   a) ein endlosfaserverstärktes Halbzeug (3) in einem Presswerkzeug (4) mittels Infrarotstrahler (8) lokal erwärmt wird, wobei das endlosfaserverstärkte Halbzeug (3), bevorzugt eine Tepex® Platte, von der Unterseite her durch wenigstens einen pyramidalen oder kegelförmigen Nietdorn bzw.Nietzapfen (1) wenigstens eines Thermoplastteils (2) fixiert wird,
   b) das Durchdringen des in Schritt a) lokal erwärmten endlosfaserverstärkten Halbzeugs (3) von wenigstens einem pyramidalen oder kegelförmigen Nietdorn bzw. Nietzapfen (1) als Bestandteil des als Fügepartner dienenden wenigstens einen Thermoplastteils (2), ohne dass zuvor das endlosfaserverstärkte Halbzeug (3) gebohrt oder gelocht wurde und
   c) das Umformen des wenigstens einen pyramidalen oder kegelförmigen Nietdorns bzw. Nietzapfens (1) durch wenigstens einen Ultraschallnietstempel (9) zu wenigstens einem Nietkopf (10) unter Erhalt eines festen Formschlusses und Stoffschlusses von endlosfaserverstärktem Halbzeug (3) und wenigstens einem Thermoplastteil (2).

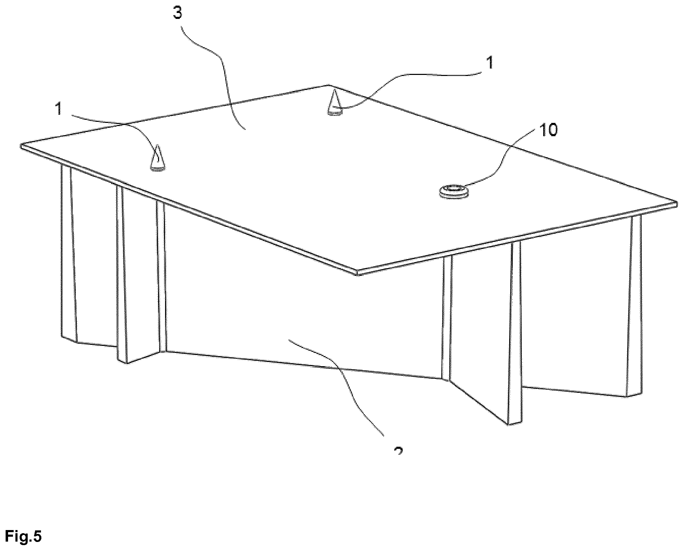

Fig. 5 zeigt zwei Nietdorne bzw. Nietzapfen nach der Durchdringung eines endlosfaserverstärkten Halbzeugs sowie einen Nietkopf (10), der nach Einwirken eines Nietstempels auf einen Nietdorn bzw. Nietzapfen nach dessen Durchdringung des endlosfaserverstärkten Halbzeugs ausgeformt wurde.

In der Verbundtechnik wird zwischen einem formschlüssigen und einem stoffschlüssigen Verbund unterschieden. Während beim formschlüssigen Verbund der Zusammenhalt der Komponenten durch hinterschnittige Bereiche erzielt wird, müssen hierzu beim stoffschlüssigen Verbund, insbesondere beim Verbund von Kunststoff-Metall Komponenten, Haftvermittler, auch als Primer bezeichnet, eingesetzt werden.

Ein fester Stoffschluss im Sinne der vorliegenden Erfindung bedeutet, dass endlosfaserverstärktes Halbzeug bzw. Organoblech und Spritzgießmasse des Thermoplastteils aus derselben Matrix bestehen, wodurch an den Verbindungsstellen beider Komponenten, während des Verbindungsvorgangs, ein stoffschlüssiger Verbund entsteht.

Fester Formschluss im Sinne der vorliegenden Erfindung bedeutet, dass das erwärmte Polymer über Mikrostrukturen in der Oberfläche des Organoblech-Grundkörpers und über den Nietzapfen und dessen Durchdringung des Organoblech-Grundkörpers eine feste Verbindung mit diesem eingeht. Gemäß EP-A 0 370 342 ist ein fester Formschluss sinngemäß das Gegenstück zu einem losen Formschluss und bedeutet einen Verbund von zwei Komponenten ohne Spiel. Der Begriff Formschluss selber bedeutet, dass der formschließende Querschnitt unter Last zerstört werden muss, um die verbundenen Teilstücke, hier endlosfaserverstärktes Halbzeug und Thermoplastteil, voneinander zu trennen.

Ein stoffschlüssiger Verbund und ein formschlüssiger Verbund werden am Beispiel von Kunststoff-Metall Erzeugnissen beispielsweise im Dokument "Hochschule_trifft_Mittelstand-IKV-Klaus_Kuesters-Highlight.pdf" von www.ikv-aachen.de vom 13. Juli 2011 gegenüber gestellt. Beim formschlüssigen Verbund ist die punktuelle Krafteinleitung charakteristisch, während der stoffschlüssige Verbund durch eine flächige Krafteinleitung gekennzeichnet ist. Im Gegensatz zum Kunststoff-Metall Verbund in der oben genannten Publikation, ist in der vorliegenden Erfindung aufgrund derselben Matrix im endlosfaserverstärkten Halbzeug sowie im Thermoplastteil kein Haftvermittler erforderlich, um zusätzlich zum formschlüssigen Verbund einen stoffschlüssigen Verbund zu erzielen.

In bevorzugter Ausführungsform wird das endlosfaserverstärkte Halbzeug im Schritt a) lokal auf Temperaturen erwärmt, die abhängig vom Thermoplasten im Matrixkunststoff des Organoblechs im Bereich von 40°C unterhalb bis zu 5°C oberhalb des Schmelzpunktes des Thermoplasten im Organoblech liegen. Diese Temperaturen liegen für die im Rahmen der vorliegenden Erfindung bevorzugt für die Herstellung von Organoblechen genannten Thermoplasten im Bereich von 140° C bis 380° C, werden aber unter Umständen durch im Organoblech eingesetzte Additive maßgeblich beeinflusst. Für das in einer Ausführungsform insbesondere bevorzugt einzusetzende Polyamid 6 (PA6) liegt die Temperatur zum Erwärmen des Organoblechs im Bereich von 140° C bis 220° C, bevorzugt im Bereich von 180° C bis 220° C, besonders bevorzugt im Bereich von 200° C bis 220° C, ganz besonders bevorzugt im Bereich von 210° C bis 220° C, insbesondere bevorzugt im Bereich von 215° C bis 220° C.

Die vorliegende Erfindung erbrachte zudem die überraschende Erkenntnis, dass ein formschlüssiger und stoffschlüssiger Verbund erzielt werden kann, selbst wenn das einzusetzende Organoblech in Schritt a) auf Temperaturen von bis zu 40°C unterhalb des Schmelzpunktes des in der Matrix des Organoblechs einzusetzenden Thermoplasten, insbesondere im Falle des PA6 als Matrix des Organoblechs, erwärmt wird.

Ein erfindungsgemäß einzusetzendes endlosfaserverstärktes Halbzeug bzw. Organoblech umfasst wenigstens eine Lage eines Endlosfasertextils in einem Thermoplasten als Matrixkunststoff. Herstellungsbedingt handelt es sich dabei um ein zunächst ebenflächiges Erzeugnis, das erst durch ein Umformungsverfahren in ein dreidimensionales Erzeugnis überführt wird. In einer bevorzugten Ausführungsform enthält ein solches Organoblech wenigstens zwei Lagen eines Endlosfasertextils, jedoch höchstens 24 Lagen. Besonders bevorzugt enthält ein erfindungsgemäß einzusetzendes Organoblech wenigstens zwei bis fünf Lagen, ganz besonders bevorzugt enthält ein erfindungsgemäß einzusetzendes Organoblech zwei oder drei Lagen eines Endlosfasertextils.

In einer bevorzugten Ausführungsform werden für das erfindungsgemäß einzusetzende Organoblech Endlosfasertextilien von Geweben oder Gelegen auf Basis wenigstens eines Rohstoffs der Gruppe Glas, Kohlenstoff, Aramid und Stahl oder deren Mischformen, eingesetzt.

Bevorzugt werden Glasfasern, Kohlenstofffasern, Aramidfasern oder Stahlfasern im Organoblech eingesetzt, besonders bevorzugt Glasfasern oder Kohlenstofffasern, ganz besonders bevorzugt Glasfasern.

Bevorzugt werden Lagen von Glasfasergewebe mit einem Gewicht im Bereich von 50 g/m² bis 1200 g/m², besonders bevorzugt im Bereich von 200 g/m² bis 800 g/m², ganz besonders bevorzugt im Bereich von 550 g/cm² bis 650 g/cm² eingesetzt.

In einer bevorzugten Ausführungsform für die Matrix des erfindungsgemäß einzusetzenden endlosfaserverstärkten Halbzeugs/Organoblechs als Kunststoff wenigstens ein Thermoplast der Gruppe Polyamid 6 (PA6), Polyamid 66 (PA66), Polypropylen (PP), Polyphenylensulfid (PPS), Polyurethan (TPU), Polyphthalamid (PPA), Polybutylenterephthalat (PBT), Polyamid 12 (PA12) und Polycarbonat (PC) eingesetzt. Bevorzugt werden PA6, PA66 oder PP für die Matrix des Organoblechs eingesetzt, besonders bevorzugt PA6.

Bevorzugt werden teilkristalline Kunststoffe eingesetzt, besonders bevorzugt teilkristalline Polyamide, insbesondere teilkristallines Polyamid 6. Gemäß DE 10 2011 084 519 A1 besitzen teilkristalline Polyamide eine Schmelzenthalpie von mehr als 25 J/g, gemessen mit der DSC-Methode gemäß ISO 11357 beim zweiten Aufheizen und Integration des Schmelzpeaks. Sie unterscheiden sich dadurch von den semikristallinen Polyamiden, die eine Schmelzenthalpie im Bereich von 4 bis 25 J/g, gemessen mit der DSC-Methode gemäß ISO 11357 beim 2. Aufheizen und Integration des Schmelzpeaks und von den amorphen Polyamiden mit einer Schmelzenthalpie von weniger als 4 J/g, gemessen mit der DSC-Methode gemäß ISO 11357 beim 2. Aufheizen und Integration des Schmelzpeaks.

Die Kennzeichnung der Polyamide im Rahmen der vorliegenden Erfindung entspricht internationaler Norm, wobei die erste(n) Ziffer(n) die C-Atomzahl des Ausgangsdiamins und die letzte(n) Ziffer(n) die C-Atomzahl der Dicarbonsaure angeben. Wird nur eine Zahl genannt, so bedeutet dies, dass von einer α,ω -Aminocarbonsaure bzw. von dem davon abgeleiteten Lactam ausgegangen worden ist; im Übrigen sei verwiesen auf H. Domininghaus, Die Kunststoffe und ihre Eigenschaften, Seiten 272 ff. , VDI-Verlag, 1976).

Bevorzugt wird für das erfindungsgemäß einzusetzende Organoblech ein Thermoplast eingesetzt, der eine Schmelzviskosität im Bereich von 10¹ bis 10⁶ Pa·s hat. Besonders bevorzugt werden für die Matrix des Organoblechs Polyamide mit einer relativen Viskosität ηᵣₑₗ, gemessen in 1 gew.-%iger m-Kresollösung bei 25° C im Bereich von 2,3 bis 4,0; besonders bevorzugt im Bereich von 2,7 bis 3,5 eingesetzt. Unter der Schmelzviskosität wird erfindungsgemäß die Viskosität in der schmelzflüssigen Phase am Schmelzpunkt des / der im Rahmen der vorliegenden Erfindung einzusetzenden Kunststoffe(s), bevorzugt Thermoplasten, verstanden. Im erweiterten Sinne versteht man insbesondere bei makromolekularen Stoffen, die meist keinen festen Schmelzpunkt besitzen, auch Viskositätsfunktionen, die an der Schmelze bei anderen Temperaturen als der Schmelztemperatur gemessen wurden. Diese Bedeutung ist insbesondere für Polymere wichtig, da diese im Gegensatz zu niedermolekularen Stoffen meist nicht über einen festen Schmelzpunkt, sondern über einen weiten Schmelz- bzw. Erweichungsbereich verfügen. Die Schmelzviskosität ist nicht nur vom Molekülaufbau (Molmasse, Verzweigungsgrad, Wechselwirkungen), sondern in erheblichem Maße auch von der Temperatur und den Scherbedingungen (z.B. Schergefälle oder Düsengeometrie) abhängig. Demzufolge wird die Schmelzviskosität eines Stoffes meist für jeweils verschiedene Temperaturen in Abhängigkeit von der Schergeschwindigkeit (oder vergleichbaren Größen) gemessen und die Abhängigkeiten dann graphisch dargestellt. Die Viskosität von Schmelzen homologer Reihen makromolekularer Substanzen nimmt mit konstanter Temperatur mit steigendem Gewichtsmittel des Molekulargewichtes zu. Die Schmelzviskosität wird meist in heizbaren Rotations-Viskosimetern vom Platte-Kegel- oder Platte-Platte-Typ oder in speziellen Kapillar-Viskosimetern ermittelt, wobei auf Temperaturkonstanz während der Messung zu achten ist. Die Schmelzviskosität hat insbesondere für die Auslegung und die Fahrweise von Kunststoffverarbeitungsanlagen eine große praktische Bedeutung. Wichtig ist die Kenntnis der Schmelzviskositäten bei allen formgebenden Verfahren, die Schmelzen nutzen, insbesondere Schmelzspinnen, Extrudieren, Spritzgießen und Thermoformen. Die Schmelzviskosität wurde im Rahmen der vorliegenden Erfindung gemäß ISO 11443 bestimmt (siehe auch H.Steffens, F. Sauerwald, Kolloid Zeitschrift, Vol. 148, Ausg. 3, September 1956, 144 - 150)

Erfindungsgemäß insbesondere bevorzugt als Matrix des Organoblechs einzusetzendes teilkristallines PA66 (CAS No. 32131-17-2) ist beispielsweise unter der Bezeichnung Durethan® A bei der Lanxess Deutschland GmbH, Köln, Deutschland erhältlich. Erfindungsgemäß insbesondere bevorzugt als Matrix des Organoblechs einzusetzendes teilkristallines PA6 (CAS No. 25038-54-4) ist beispielsweise unter der Bezeichnung Durethan® B bei der Lanxess Deutschland GmbH, Köln, Deutschland erhältlich.

Bevorzugt liegt der Fasergehalt im erfindungsgemäß einzusetzenden Organoblech im Bereich von 40 bis 60 Vol.-%, besonders bevorzugt im Bereich von 45 bis 55 Vol.-%, ganz besonders bevorzugt im Bereich von 45 bis 48 Vol.-%, wobei die Summe aller Inhaltsstoffe des Organoblechs stets 100 Vol.-% ergibt. Als weitere gegebenenfalls im erfindungsgemäß einzusetzenden Organoblech vorliegende Inhaltsstoffe werden üblicherweise die im jeweiligen Kunststoff einzusetzenden Additive eingesetzt, die dem Fachmann bekannt sind.

Erfindungsgemäß als endlosfaserverstärkte Halbzeuge einzusetzende Organobleche sind beispielsweise bei der Firma Bond-Laminates GmbH, Brilon, Deutschland unter der Marke TEPEX® erhältlich. Diese Organobleche sind vollständig imprägnierte und konsolidierte Halbzeuge. Versuche im Rahmen der vorliegenden Erfindung wurden mit "TEPEX® dynalite 102-RG600(2)/47% Typ B 1 mm black" durchgeführt, einem 1mm Materialstärke aufweisenden, schwarz eingefärbten Organoblech aus zwei Lagen Rovingglas-Gewebe, mit einem Gewicht von 600 g/m² und einem in Bezug auf die Polyamid 6 Matrix Faservolumengehalt von 47%.

Ein Herstellungsverfahren für erfindungsgemäß einzusetzende Organobleche ist beispielsweise aus EP 1 923 420 A1 bekannt, deren Inhalt hiermit vollumfänglich umfasst wird. Die bei der Herstellung von Organoblechen angewandten Temperaturen orientieren sich an den Erweichungspunkten der einzusetzenden Kunststoffe, bevorzugt Thermoplasten, und liegen bevorzugt im Bereich von 140 bis 380° C. Die bei der Herstellung von Organoblechen anzuwendenden Flächendrücke liegen bevorzugt im Bereich von 0,1 bis 5 MPa.

Bei dem als Fügepartner einzusetzenden wenigstens einen Thermoplastteil handelt es sich bevorzugt um spritzgegossene Thermoplastbauteile auf Basis wenigstens eines Thermoplasten der Reihe Polyamid 6 (PA6), Polyamid 66 (PA66), Polyprolylen (PP), Polyphenylensulfid (PPS), thermoplastisches Polyurethan (TPU), Polyphthalamid (PPA), Polybutylenterephthalat (PBT), Polyamid 12 (PA12) oder Polycarbonat (PC). Bevorzugt werden PA6, PA66 oder PP als Thermoplast für die Matrix des Thermoplastteils eingesetzt, besonders bevorzugt PA6.

In bevorzugter Ausführungsform handelt es sich um verstärkte Thermoplastteile, die wenigstens einen Verstärkungsstoff der Reihe Glas, Kohlenstoff, Aramid oder Stahl oder deren Mischformen, aufweisen.

Bevorzugt werden Glasfasern, Kohlenstofffasern, Aramidfasern oder Stahlfasern im Organoblech eingesetzt, besonders bevorzugt Glasfasern oder Kohlenstofffasern, ganz besonders bevorzugt Glasfasern.

Die insbesondere bevorzugt einzusetzenden Glasfasern haben bevorzugt einen Faserdurchmesser im Bereich von 7 und 18 µm, besonders bevorzugt im Bereich von 9 und 15 µm, und werden als Endlosfasern oder als geschnittene oder gemahlene Glasfasern zugesetzt. Die Fasern werden bevorzugt mit einem geeigneten Schlichtesystem und einem Haftvermittler bzw. Haftvermittlersystem, besonders bevorzugt auf Silanbasis, ausgerüstet.

Ganz besonders bevorzugte Haftvermittler auf Silanbasis für die Vorbehandlung sind Silanverbindungen der allgemeinen Formel (I)

(X-(CH₂)_{q})k-Si-(O-CrH₂r+1)₄-k (I)

in der die Substituenten folgende Bedeutung haben:
- X:: NH₂-, HO-,

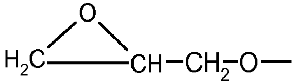

- q:: eine ganze Zahl von 2 bis 10, bevorzugt 3 bis 4,
- r:: eine ganze Zahl von 1 bis 5, bevorzugt 1 bis 2,
- k:: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Glasfasern werden die Silanverbindungen bevorzugt in Mengen von 0,05 bis 2 Gew.-%, besonders bevorzugt 0,25 bis 1,5 Gew.-% und insbesondere 0,5 bis 1 Gew.-% bezogen auf die Glasfasern zur Oberflächenbeschichtung eingesetzt.

Die Glasfasern können bedingt durch die Verarbeitung zur Formmasse bzw. dem daraus herzustellenden Erzeugnis in der Formmasse bzw. im Erzeugnis einen kleineren d97- bzw. d50-Wert aufweisen, als die ursprünglich eingesetzten Glasfasern. Die Glasfasern können bedingt durch die Verarbeitung zur Formmasse bzw. Formkörper in der Formmasse bzw. im Formkörper kürzere Längenverteilungen als ursprünglich eingesetzt aufweisen.

Der Gehalt an Verstärkungsstoff im Thermoplasten des als Fügepartner einzusetzenden Thermoplastteils liegt bevorzugt im Bereich von 15 bis 60 Vol.-%, besonders bevorzugt im Bereich von 30 bis 60 Vol.-%, ganz besonders bevorzugt im Bereich von 50 bis 60 Vol.-% bezogen auf das Gesamtgewichts des Thermoplastteils, wobei die Summe aller Volumenprozente der Inhaltsstoffe des Thermoplastteils stets 100 ergibt.

Neben dem Verstärkungsstoff bzw. der Endlosfaserverstärkung können weitere Additive sowohl im Thermoplasten des als Fügepartner dienenden Thermoplastteils, als auch im Organoblech vorhanden sein. Übliche Additive sind bevorzugt Stabilisatoren, Entformungsmittel, UV-Stabilisatoren, Gammastrahlenstabilisatoren, Antistatika, Fließhilfsmittel, Flammschutzmittel, Elastomermodifikatoren, Brandschutzadditive, Emulgatoren, Nukleierungsmittel, Weichmacher, Gleitmittel, Farbstoffe oder Pigmente. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

In einer bevorzugten Ausführungsform enthält die Matrix des Organoblechs denselben Thermoplasten wie er in dem wenigstens einen Thermoplasteil enthalten ist, aus der Gruppe Polyamid 6 (PA6), Polyamid 66 (PA66), Polyprolylen (PP), Polyphenylensulfid (PPS), thermoplastisches Polyurethan (TPU), Polyphthalamid (PPA), Polybutylenterephthalat (PBT), Polyamid 12 (PA12) und Polycarbonat (PC). Bevorzugt werden sowohl in der Matrix des Organoblechs als im wenigstens einen Thermoplastteil dieselben Thermoplasten ausgewählt aus der Gruppe PA6, PA66 und PP eingesetzt, besonders bevorzugt PA6.

Das Verfahren des Spritzgusses zur Herstellung der als Fügepartner dienenden Thermoplastteile ist dem Fachmann bekannt. Der Spritzguss thermoplastischer Formmassen zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt. Beim Spritzgussverfahren unterscheidet man die Verfahrensschritte 1. Plastifizieren / Aufschmelzen, 2. Einspritzphase (Füllvorgang),3. Nachdruckphase (wegen thermischer Kontraktion bei der Kristallisation) und 4. Entformen. Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit). Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Polymer enthaltende Pulver bzw. das Polymer enthaltende Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst. Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe: i) Angusssystem, ii) Formbildende Einsätze, iii) Entlüftung, iv) Maschinen- und Kraftaufnahme, v) Entformungssystem und Bewegungsübertragung sowie vi) Temperierung.

Erfindungsgemäß werden Thermoplastteile eingesetzt, die wenigstens einen Nietdorn oder Nietzapfen aufweisen. Dieser bzw. diese werden durch entsprechende Kavitäten im Spritzgießwerkzeug bzw. im Presswerkzeug im Spritzgießprozess bzw. Pressprozess direkt an das Thermoplastteil mit angeformt. Demzufolge besteht der wenigstens eine Nietdorn bzw. Nietzapfen bevorzugt aus demselben Thermoplasten, wie das erfindungsgemäß für den Verbund einzusetzende Thermoplastteil.

Ist das erfindungsgemäß wenigstens eine einzusetzende Thermoplastteil ein Erzeugnis mit Verstärkungsrippen, so befindet sich der wenigstens eine Nietdorn bzw. Nietzapfen bevorzugt auf wenigstens einem Rippenkreuz, wobei der wenigstens eine Nietdorn aus der Ebene wenigstens eines Rippenkreuzes herausragt, damit er für die Durchdringung des mit dem Thermoplastteil zu verbindenden Organoblechs zur Verfügung steht. Beispiele für Erzeugnisse mit Verstärkungsrippen werden in EP 0 370 342 A2 offenbart.

Sollte am Thermoplastteil kein Rippenkreuz oder keine ausreichende Anzahl an Rippenkreuzen für Nietdorne vorhanden sein, so kann in bevorzugter Ausführungsform der wenigstens eine Nietdorn auf Bauteilecken oder auf der mittleren Position von Thermoplast-Verstärkungsrippen angeordnet sein..

Der erfindungsgemäße Verbund ist in den Bereichen Schiffsbau, Flugzeugbau, Automotive und Non-Automotive, bevorzugt in Fahrzeugteilen (automotive Bereich), in tragenden Teilen von Büromaschinen, Haushaltsmaschinen oder anderen Maschinen, in Konstruktionselementen für Dekorationszwecke, Treppenstufen, Fahrtreppenstufen oder Kanaldeckeln einsetzbar. Die vorliegende Erfindung betrifft daher die Verwendung dieses Verbunds in den genannten Bereichen.

Bevorzugt erfolgt der Einsatz im Automotive Bereich in Kraftfahrzeugen als Dachstrukturen, bestehend beispielsweise aus Dachrahmen, Dachspriegel und/oder Dachspitzen, für Säulenstrukturen, insbesondere A-, B- und/oder C-Säulen von Kraftfahrzeugen, für Fahrwerk-Strukturen, bestehend beispielsweise aus Achsschenkel, Koppelstange, Querlenker und/oder Stabilisatoren, für Längsträgerstrukturen, beispielsweise bestehend aus Längsträger und/oder Schweller, für Vorderwagenstrukturen, bestehend beispielsweise aus Frontends, Vorderwagenmodul, Scheinwerferrahmen, Schlossträger, Querträger, Kühlerträger und/oder Montageträger, für Pedalstrukturen, beispielsweise bestehend aus Brems-, Gas- und Kupplungspedal, Pedalbock und/oder Pedalmodul, für Türen- und Klappenstrukturen, beispielsweise vordere und hintere Fahrer- und Beifahrertüren, Heckklappen und/oder Motorhaube, für Instrumententafelträgerstrukturen, bestehend beispielsweise aus Querträger, Instrumententafelträger und/oder Cockpitträger, für Ölwannen, beispielsweise Getriebeölwannen und/oder Ölmodule, für Sitzstrukturen, beispielsweise bestehend aus Sitzlehnenstruktur, Rückenlehnenstruktur, Sitzwannenstruktur, Gurtholm und/oder Armlehnen, komplette Frontends, Fußgängerschutz Beam, reine Schlossbrücken für Motorhauben oder Kofferraumdeckel, Dachspriegel vorne, Dachspriegel hinten, Dachrahmen, Dachmodule (gesamtes Dach), Schiebedach-Trägerteile, Armaturentafelträgerteile (Cross Car Beam), Lenkstockhalter, Feuerwand, Pedale, Pedalblöcke, Schaltblöcke von Getrieben, A-, B-, C-Säulen, B-Säulenmodule, Längsträger, Knotenelemente zum Verbinden von Längsträgern und B-Säulen, Knotenelemente zum Verbinden von A-Säule und Querträger, Knotenelemente zum Verbinden von A-Säule, Querträger und Längsträger, Querträger, Kotflügelbänke, Kotflügelmodule, Crash Boxen, Rear Ends, Reserveradmulden, Motorhauben, Motorabdeckungen, Wasserkastenbank, Motorversteifungen (Versteifung Vorderwagen), Fahrzeugboden, Sitzversteifung, Bodenversteifungen, Heckklappen, Fahrzeugrahmen, Sitzstrukturen, Rückenlehnen, Sitzschalen, Rücksitzlehnen mit und ohne Gurtintegration, Hutablagen, Sitzquerträger, Ventildeckel, Lagerschilde für Lichtmaschinen oder Elektromotoren, komplette Fahrzeugtürstrukturen, Seitenaufprallträger, Modulträger, Ölwannen, Getriebeölwannen, Ölmodule, Scheinwerferrahmen, Schweller, Schwellerverstärkungen, Fahrwerkskomponenten sowie Motorrollerrahmen.

Bevorzugter Einsatz eines erfindungsgemäßen Verbunds im non automotive Bereich, ist in E/E Geräten, Haushaltsgeräten, Möbeln, Heizthermen, Einkaufswagen, Regale, Treppenstufen, Fahrtreppenstufen, Kanaldeckeln (E/E Geräte = elektrische und elektronische Geräte).

Selbstverständlich eignet sich der erfindungsgemäße Verbund von Organoblech mit Thermoplastteilen auch zum Einsatz in Bahnfahrzeugen, Flugzeugen, Schiffen, Schlitten, Motorrollern oder sonstigen Fortbewegungsmitteln, wo es auf leichte jedoch stabile Konstruktionen ankommt.

### Beispiele:

### Eingesetztes Material:

| | |
|---|---|
| Thermoplastisches Halbzeug/Organoblech: | TEPEX® dynalite 102-RG600(2)/47% Typ B 1 mm black |
| Nietdorn / Thermoplastteil: | Durethan® BKV 30, Durethan® AKV 30 |

### Eingesetzte Geräte:

Vorrichtung zum Durchdrücken eines Dorns durch eine Platte bestehend aus einer Standbohrmaschine.

Untersucht wurde, ob sich ein Organoblech aus dem o.g. Tepex® Material mit einem kurzglasfaserverstärkten Nietdorn, hier im speziellen aus PA6 und PA66 gefertigt, durchdringen bzw. durchstoßen lässt, ohne vorher eine Öffnung im Organoblech vorgesehen zu haben.

### Versuchsplan:

Folgende Parameter wurden in der Versuchsreihe variiert:

| | |
|---|---|
| Temperatur des Organoblechs | 140 °C, 180 °C, 220 °C sowie Zwischenschritte im relevanten Bereich |
| Material des Nietdorns | Durethan® BKV30 oder Durethan® AKV30 |

### Versuchsvorbereitung :

Die Organobleche wurden auf eine Abmessung von ca. 150 x 100 mm² zugeschnitten und entsprechend des Versuchsplans im Ofen aufgeheizt:
▪ 2 x 140 °C
▪ 2 x 180 °C
▪ 2 x 220 °C

Nietdorne wurden aus Angussdomen aus Durethan® AKV30 und Durethan® BKV 30 gedreht.

### Versuchsdurchführung:

Ein Nietdorn wurde in eine Standbohrmaschine eingespannt. Das aufgeheizte Organoblech wurde unter dem Nietdorn positioniert. Der Nietdorn wurde abgesenkt und durchdrang ggf. das Organoblech (CS = Composite Sheet).

### Versuchsergebnis:

Die Versuche wurden ausgewertet. Dabei wurde auf das Verhalten des Nietdorns und des Organoblechs beim Durchstoßen geachtet. Die Ergebnisse sind in Tabelle 1 festgehalten.

**Tabelle 1: Ergebnisse der Durchstoßversuche**

| **Versuchs-Nr.** | **Temperatur [°C]** | **BKV30** | **AKV30** |
|---|---|---|---|
| **1** | 140 | CS lässt sich nicht durchstoßen | |
| **2** | 180 | CS lässt sich durchstoßen Glasfasern werden teilweise durchtrennt | |
| **3** | 220 | CS loftetCS lässt sich problemlos durchstoßen | |
| | | Glasfasern werden nicht durchtrennt nur zur Seite geschoben | |
| **4** | 200 | CS lässt sich problemlos durchstoßen Glasfasern werden teilweise durchtrennt | |
| **5** | 210 | CS lässt sich problemlos durchstoßen Glasfasern werden teilweise durchtrennt | |
| **6** | 215 | CS schmilzt an der Oberfläche leicht an CS lässt sich problemlos durchstoßen Glasfasern werden nicht durchtrennt nur zur Seite geschoben | |

### Fazit:

Ein Organoblech ließ sich mit einem verstärkten Kunststoff-Nietdorn durchstoßen, ohne dass die endlosen Verstärkungsfasern im Composite Sheet durchtrennt werden.

Ab einer Vorheiztemperatur von 215° C war ein Anschmelzen der Oberfläche des Organoblechs zu erkennen.

Bei einer Vorheiztemperatur von 220° C war die Matrix des Organoblechs soweit aufgeschmolzen, dass dieses loftete. Loften im Sinne der vorliegenden Erfindung bedeutet, dass das konsolidierte Organoblech, also das vollständig durch die thermoplastische Matrix imprägnierte Gewebe ohne jegliche Lufteinschlüsse, beim Erwärmen oberhalb der Schmelzetemperatur der thermoplastischen Matrix wieder aufquoll und Luft in den Faser/Matrix Verbund eindrang.

Überraschenderweise ließ sich das Organoblech ab einer Vorheiztemperatur von 180° C (ca. 40° C unterhalb der Schmelzetemperautur) bereits durchstoßen.

Ab einer Vorheiztemperatur von 215° C wurden die endlosen Glasfasern des Organoblechs vom Nietdorn verdrängt, jedoch nicht durchtrennt.

## Patentansprüche

1. Verfahren zur Verbindung wenigstens eines endlosfaserverstärkten Halbzeugs (3) mit wenigstens einem Thermoplastteil (2), wobei man
a) wenigstens ein endlosfaserverstärktes Halbzeug (3) in einem Presswerkzeug (4) lokal dort erwärmt, wo der Verbund von endlosfaserverstärktem Halbzeug (3) mit wenigstens einem Thermoplastteil (2) erfolgen soll,
b) wenigstens einen zunächst pyramidalen oder kegelförmigen Nietdorn (1) oder Nietzapfen als Bestandteil des wenigstens einen Thermoplastteils (2) durch das wenigstens eine lokal erhitzte zuvor weder gelochte noch durchbohrte endlosfaserverstärkte Halbzeug (3) hindurch dringen lässt unter Beibehaltung der ursprünglichen Geometrie des/der Nietdorns(e) bzw. Nietzapfen(s) (1) und
c) den wenigstens einen durch das wenigstens eine endlosfaserverstärkte Halbzeug (3) nach Schritt b) hinausragenden Nietdorn bzw. Nietzapfen (1) durch wenigstens einen Nietstempel (5) zu einem Nietkopf bzw. Nietköpfen (10) umformt und erstarren lässt, wobei es sich bei dem endlosfaserverstärkten Halbzeug (3) um wenigstens eine Lage eines Endlosfasertextils in einem Thermoplasten als Matrixkunststoff handelt.

2. Verfahren gemäß Anspruch 1, **dadurch gekennzeichnet, dass** vor Verfahrensschritt c) der wenigstens eine durch das wenigstens eine endlosfaserverstärkte Halbzeug (3) hinausragende Nietdorn bzw. Nietzapfen (1) vor der Umformung erwärmt wird.

3. Verfahren gemäß Anspruch 2, **dadurch gekennzeichnet, dass** die Erwärmung des wenigstens einen Nietdorns (1) durch Heißluft oder durch Ultraschallschwingungen erfolgt.

4. Verfahren gemäß einem der Ansprüche 1 bis 3, **dadurch gekennzeichnet, dass** es sich bei dem Thermoplastteil (2) um ein spritzgegossenes oder gepresstes Thermoplastteil, bevorzugt um ein spritzgegossenes Thermoplastteil handelt.

5. Verfahren gemäß einem der Ansprüche 1 bis 4, **dadurch gekennzeichnet, dass** das endlosfaserverstärkte Halbzeug (3) im Schritt a) lokal auf Temperaturen erwärmt wird, die abhängig vom Thermoplasten im Matrixkunststoff des Organoblechs im Bereich von 40°C unterhalb bis zu 5°C oberhalb des Schmelzpunktes des Thermoplasten im Organoblech liegen.

6. Verfahren gemäß Anspruch 5, **dadurch gekennzeichnet, dass** diese Temperaturen im Bereich von 140° C bis 380° C liegen.

7. Verfahren gemäß einem der Ansprüche 1 bis 6, **dadurch gekennzeichnet, dass** als Kunststoff für die Matrix des endlosfaserverstärkten Halbzeugs (3) wenigstens ein Thermoplast der Gruppe Polyamid 6 (PA6), Polyamid 66 (PA66), Polypropylen (PP), Polyphenylensulfid (PPS), Polyurethan (TPU), Polyphthalamid (PPA), Polybutylenterephthalat (PBT), Polyamid 12 (PA12) und Polycarbonat (PC) eingesetzt wird, bevorzugt PA6, PA66 oder PP, besonders bevorzugt PA6.

8. Verfahren gemäß Anspruch 7, **dadurch gekennzeichnet, dass** die Temperatur zum Erwärmen des endlosfaserverstärkten Halbzeugs (3) im Bereich von 140° C bis 220° C liegt.

9. Verfahren gemäß einem der Ansprüche 1 bis 8, **dadurch gekennzeichnet, dass** es sich bei dem wenigstens einen Thermoplastteil (2) um spritzgegossene Thermoplastbauteile auf Basis wenigstens eines Thermoplasten der Reihe Polyamid 6 (PA6), Polyamid 66 (PA66), Polypropylen (PP), Polyphenylensulfid (PPS), thermoplastisches Polyurethan (TPU), Polyphthalamid (PPA), Polybutylenterephthalat (PBT), Polyamid 12 (PA12) oder Polycarbonat (PC) handelt, bevorzugt PA6, PA66 oder PP, besonders bevorzugt PA6.

10. Verfahren gemäß einem der Ansprüche 1 bis 9, **dadurch gekennzeichnet, dass** die Matrix des endlosfaserverstärkten Halbzeugs (3) sowie der wenigstens eine Thermoplastteil (2) denselben Thermoplast aus der Gruppe Polyamid 6 (PA6), Polyamid 66 (PA66), Polyprolylen (PP), Polyphenylensulfid (PPS), thermoplastisches Polyurethan (TPU), Polyphthalamid (PPA), Polybutylenterephthalat (PBT), Polyamid 12 (PA12) und Polycarbonat (PC) enthalten, bevorzugt aus der Gruppe PA6, PA66 und PP, besonders bevorzugt PA6.

11. Verfahren gemäß einem der Ansprüche 1 bis 10, **dadurch gekennzeichnet, dass** der wenigstens eine Nietdorn (1) durch entsprechende Kavitäten im Spritzgießwerkzeug bzw. im Presswerkzeug im Spritzgießprozess bzw. Pressprozess direkt an das Thermoplastteil (2) mit angeformt wurde und aus demselben Thermoplasten wie das für den Verbund einzusetzende Thermoplastteil (2) besteht.

12. Verfahren gemäß einem der Ansprüche 1 bis 11, **dadurch gekennzeichnet, dass** das wenigstens eine einzusetzende Thermoplastteil (2) ein Erzeugnis mit Verstärkungsrippen, ist und sich der wenigstens eine Nietdorn (1) auf wenigstens einem Rippenkreuz befindet, wobei der Dorn aus der Ebene des Rippenkreuzes herausragt.

13. Verfahren gemäß einem der Ansprüche 1 bis 12, **dadurch gekennzeichnet, dass** der wenigstens eine Nietdorn (1) aus demselben Thermoplasten, wie das für den Verbund einzusetzende Thermoplastteil (2) besteht.

14. Verfahren gemäß Anspruch 12 oder 13, **dadurch gekennzeichnet, dass** wenn am Thermoplastteil (2) kein Rippenkreuz oder keine ausreichende Anzahl an Rippenkreuzen für Nietdorne vorhanden sind, der wenigstens eine Nietdorn (1) auf Bauteilecken oder auf der mittleren Position von Thermoplast-Vertärkungsrippen angeordnet sein kann.

## Claims

1. Process for the bonding of at least one continuous-fibre-reinforced semifinished product (3) to at least one thermoplastic part (2), where
a) in a press unit (4), local heating of at least one continuous-fibre-reinforced semifinished product (3) is carried out at locations where continuous-fibre-reinforced semifinished product (3) is to be bonded to at least one thermoplastic part (2),
b) at least one initially pyramidal or conical rivet mandrel (1) or rivet spigot as constituent of the at least one thermoplastic part (2) is caused to penetrate the at least one locally heated continuous-fibre-reinforced semifinished product (3), which previously has been neither perforated nor drilled, with retention of the original geometry of the rivet mandrel(s) or rivet spigot(s) (1) and
c) by use of at least one riveting punch (5), the shape of the at least one rivet mandrel or rivet spigot (1) protruding after step b) through the at least one continuous-fibre-reinforced semifinished product (3) is changed to a rivet head or rivet heads (10), and the said mandrel or spigot is caused to cool, where the continuous-fibre-reinforced semifinished product (3) involves at least one ply of a continuous-fibre textile in a thermoplastic as matrix plastic.

2. Process according to Claim 1, **characterized in that** before step c), the at least one rivet mandrel or rivet spigot (1) protruding through the at least one continuous-fibre-reinforced semifinished product (3) is heated before the shape-change procedure.

3. Process according to Claim 2, **characterized in that** the heating of the at least one rivet mandrel (1) is achieved through use of hot air or through use of ultrasound oscillations.

4. Process according to any of Claims 1 to 3, **characterized in that** the thermoplastic part (2) is an injection-moulded or compression-moulded thermoplastic part, preferably an injection-moulded thermoplastic part.

5. Process according to any of Claims 1 to 4, **characterized in that** local heating of the continuous-fibre-reinforced semifinished product (3) in the step a) is carried out to temperatures which, depending on the thermoplastic in the matrix plastic of the organopanel, are in the range from 40°C below to 5°C above the melting point of the thermoplastic in the organopanel.

6. Process according to Claim 5, **characterized in that** these temperatures are in the range from 140°C to 380°C.

7. Process according to any of Claims 1 to 6, **characterized in that** plastic used for the matrix of the continuous-fibre-reinforced semifinished product (3) comprises at least one thermoplastic from the group of polyamide 6 (PA6), polyamide 66 (PA66), polypropylene (PP), polyphenylene sulfide (PPS), polyurethane (TPU), polyphthalamide (PPA), polybutylene terephthalate (PBT), polyamide 12 (PA12) and polycarbonate (PC), preferably PA6, PA66 or PP, particularly preferably PA6.

8. Process according to Claim 7, **characterized in that** the temperature for the heating of the continuous-fibre-reinforced semifinished product (3) is in the range from 140°C to 220°C.

9. Process according to any of Claims 1 to 8, **characterized in that** the at least one thermoplastic part (2) is an injection-moulded thermoplastic component based on at least one thermoplastic from the group of polyamide 6 (PA6), polyamide 66 (PA66), polypropylene (PP), polyphenylene sulfide (PPS), thermoplastic polyurethane (TPU), polyphthalamide (PPA), polybutylene terephthalate (PBT), polyamide 12 (PA12) and polycarbonate (PC), preferably PA6, PA66 or PP, particularly preferably PA6.

10. Process according to any of Claims 1 to 9, **characterized in that** the at least one thermoplastic part (2) and the matrix of the continuous-fibre-reinforced semifinished product (3) comprise the same thermoplastic from the group of polyamide 6 (PA6), polyamide 66 (PA66), polypropylene (PP), polyphenylene sulfide (PPS), thermoplastic polyurethane (TPU), polyphthalamide (PPA), polybutylene terephthalate (PBT), polyamide 12 (PA12) and polycarbonate (PC), preferably PA6, PA66 or PP, particularly preferably PA6.

11. Process according to any of Claims 1 to 10, **characterized in that**, through the use of appropriate cavities in the injection mould or in the press unit in the injection-moulding process or, respectively, compression process, the at least one rivet mandrel (1) has been concomitantly moulded directly on to the thermoplastic part (2), and consists of the same thermoplastic as the thermoplastic part (2) to be used for the composite.

12. Process according to any of Claims 1 to 11, **characterized in that** the at least one thermoplastic part (2) to be used is a product with reinforcement ribs, and the location of the at least one rivet mandrel (1) is on at least one rib intersection, where the mandrel protrudes from the plane of the rib intersection.

13. Process according to any of Claims 1 to 12, **characterized in that** the at least one rivet mandrel (1) consists of the same thermoplastic as the thermoplastic part (2) to be used for the composite.

14. Process according to Claim 12 or 13, **characterized in that**, if within the thermoplastic part (2) there is no rib intersection, or an inadequate number of rib intersections, present for rivet mandrels, the at least one rivet mandrel (1) can be arranged on component corners or on the centre of thermoplastic reinforcement ribs.

## Revendications

1. Procédé pour l'assemblage d'au moins un produit semi-fini (3) renforcé par des fibres continues avec au moins une pièce thermoplastique (2), dans lequel
a) on chauffe au moins un produit semi-fini (3) renforcé par des fibres continues dans un outil de pressage (4), localement, là où l'assemblage du produit semi-fini (3) renforcé par des fibres continues avec au moins une pièce thermoplastique (2) doit avoir lieu,
b) on fait pénétrer au moins une aiguille ou une tige de rivet (1), d'abord pyramidale ou conique, en tant qu'élément de ladite au moins une pièce thermoplastique (2) à travers ledit au moins un produit semi-fini (3) renforcé par des fibres continues, localement chauffé, au préalable ni troué, ni perforé, avec conservation de la géométrie initiale de la/des aiguille (s) ou tige(s) de rivet (1) et
c) on façonne ladite au moins une aiguille ou tige de rivet (1) dépassant dudit au moins un produit semi-fini (3) renforcé par des fibres continues après l'étape b) par au moins une bouterolle (5) en une/des tête (s) de rivet (10) et on la laisse se solidifier, le produit semi-fini (3) renforcé par des fibres continues étant au moins une couche d'un produit textile à fibres continues dans un thermoplastique comme matériau synthétique de matrice.

2. Procédé selon la revendication 1, **caractérisé en ce que** ladite au moins une aiguille ou tige de rivet (1) dépassant dudit au moins un produit semi-fini (3) renforcé par des fibres continues est chauffée avant le façonnage, avant l'étape de procédé c).

3. Procédé selon la revendication 2, **caractérisé en ce que** le chauffage de ladite au moins une aiguille de rivet (1) est effectué par de l'air chaud ou par des oscillations ultrasonores.

4. Procédé selon l'une quelconque des revendications 1 à 3, **caractérisé en ce qu'**il s'agit, pour la pièce thermoplastique (2), d'une pièce thermoplastique moulée par injection ou pressée, de préférence d'une pièce thermoplastique moulée par injection.

5. Procédé selon l'une quelconque des revendications 1 à 4, **caractérisé en ce que** le produit semi-fini (3) renforcé par des fibres continues dans l'étape de procédé a) est chauffé localement à des températures qui, en fonction du thermoplastique dans le matériau synthétique de matrice de la tôle organique, se situent dans la plage de 40°C en-dessous à 5°C au-dessus du point de fusion du thermoplastique dans la tôle organique.

6. Procédé selon la revendication 5, **caractérisé en ce que** ces températures se situent dans la plage de 140°C à 380°C.

7. Procédé selon l'une quelconque des revendications 1 à 6, **caractérisé en ce qu'**on utilise, comme matériau synthétique pour la matrice du produit semi-fini (3) renforcé par des fibres continues, au moins un thermoplastique du groupe formé par le polyamide 6 (PA6), le polyamide 66 (PA66), le polypropylène (PP), le poly(sulfure de phénylène) (PPS), le polyuréthane (TPU), le polyphtalamide (PPA), le poly(téréphtalate de butylène) (PBT), le polyamide 12 (PA12) et le polycarbonate (PC), de préférence le PA6, le PA66 ou le PP, de manière particulièrement préférée le PA6.

8. Procédé selon la revendication 7, **caractérisé en ce que** la température pour chauffer le produit semi-fini (3) renforcé par des fibres continues se situe dans la plage de 140°C à 220°C.

9. Procédé selon l'une quelconque des revendications 1 à 8, **caractérisé en ce qu'**il s'agit, pour ladite au moins une pièce thermoplastique (2), de pièces thermoplastiques moulées par injection à base d'au moins un thermoplastique de la série formée par le polyamide 6 (PA6), le polyamide 66 (PA66), le polypropylène (PP), le poly(sulfure de phénylène) (PPS), le polyuréthane thermoplastique (TPU), le polyphtalamide (PPA), le poly(téréphtalate de butylène) (PBT), le polyamide 12 (PA12) ou le polycarbonate (PC), de préférence le PA6, le PA66 ou le PP, de manière particulièrement préférée le PA6.

10. Procédé selon l'une quelconque des revendications 1 à 9, **caractérisé en ce que** la matrice du produit semi-fini (3) renforcé par des fibres continues ainsi que ladite au moins une pièce thermoplastique (2) contiennent le même thermoplastique du groupe formé par le polyamide 6 (PA6), le polyamide 66 (PA66), le polypropylène (PP), le poly(sulfure de phénylène) (PPS), le polyuréthane thermoplastique (TPU), le polyphtalamide (PPA), le poly(téréphtalate de butylène) (PBT), le polyamide 12 (PA12) et le polycarbonate (PC), de préférence du groupe formé par le PA6, le PA66 ou le PP, de manière particulièrement préférée le PA6.

11. Procédé selon l'une quelconque des revendications 1 à 10, **caractérisé en ce que** ladite au moins une aiguille de rivet (1) a été moulée par des cavités correspondantes dans l'outil de moulage par injection ou l'outil de pressage dans le procédé de moulage par injection ou le procédé de pressage directement sur la pièce thermoplastique (2) et est constituée par le même thermoplastique que celui pour la pièce thermoplastique (2) à utiliser pour l'assemblage.

12. Procédé selon l'une quelconque des revendications 1 à 11, **caractérisé en ce que** ladite au moins une pièce thermoplastique (2) à utiliser est un produit présentant des rainures de renforcement et ladite au moins une aiguille de rivet (1) se trouve sur au moins un croisement de nervures, l'aiguille dépassant du plan du croisement de nervures.

13. Procédé selon l'une quelconque des revendications 1 à 12, **caractérisé en ce que** ladite au moins une aiguille de rivet (1) est constituée par le même thermoplastique que celui pour la pièce thermoplastique (2) à utiliser pour l'assemblage.

14. Procédé selon la revendication 12 ou 13, **caractérisé en ce que**, lorsque la pièce thermoplastique (2) ne présente pas de croisement de nervures ou pas un nombre suffisant de croisements de nervures pour les aiguilles de rivet, ladite au moins une aiguille de rivet (1) peut être disposée sur des coins de pièces ou sur la position centrale de nervures de renforcement en thermoplastique.
